# EUROPÄISCHE PATENTSCHRIFT

(11) **EP 2 675 850 B1**
(45) Veröffentlichungstag und Bekanntmachung des Hinweises auf die Patenterteilung: **13.05.2015**
(21) Anmeldenummer: 12704789.2
(22) Anmeldetag: 16.02.2012
(51) Int. Cl.: C09C 1/30, C09C 3/10

(54) **MODIFIZIERTE KOMPOSITPARTIKEL**
MODIFIED COMPOSITE PARTICLES
PARTICULES COMPOSITES MODIFIÉES

(30) Priorität: 18.02.2011 DE 102011004361
(43) Veröffentlichungstag der Anmeldung: 25.12.2013
(73) Patentinhaber: Wacker Chemie AG, 81737 München (DE)
(72) Erfinder: HASHEMZADEH, Abdulmajid, 84508 Burgkirchen (DE)
(74) Vertreter: Ege, Markus
(86) Internationale Anmeldenummer: PCT/EP2012/052723
(87) Internationale Veröffentlichungsnummer: WO 2012/110618

(56) Entgegenhaltungen:
- WO-A1-2007/112503
- WO-A1-2010/118961
- DE-A1-102008 000 584

## Beschreibung

Gegenstand der vorliegenden Erfindung sind Verfahren zur Herstellung von modifizierten Kompositpartikeln auf Basis von organischen Polymeren und feinteiligen anorganischen Feststoffen, insbesondere Siliciumoxiden wie Wasserglas oder Silica-Solen, die nach den Verfahren erhältlichen modifizierten Kompositpartikel sowie deren Verwendung beispielsweise als Additiv, Bindemittel oder Cobindemittel für unterschiedliche Anwendungen.

Kompositpartikel enthalten organische Domänen, beispielsweise eine organische Polymermatrix, und anorganische Domänen, beispielsweise feinteilige anorganische Feststoffe, und haben üblicherweise Durchmesser von 4 bis 5000 nm. Die organischen Domänen und die anorganischen Domänen sind im Allgemeinen über physikalische oder chemische Bindungen miteinander verknüpft.

In gängigen Verfahren zur Herstellung von Kompositpartikeln werden organische Monomere mittels Emulsionspolymerisation in wässrigen Dispersionen von anorganischen Partikeln polymerisiert, wobei organische Domänen auf der Oberfläche der anorganischen Partikel verankert werden, wie beispielsweise beschrieben in Dong-Ming Qi, J. of Applied Polym. Sci., 2006, Vol. 99, Seiten 3425 bis 3432; Tsutomu Mizutani, J. of Applied Polym. Sci., 2006, Vol. 99, Seiten 659 bis 669; Frank Bauer, Macromol. Mater. Eng., 2006291, Seiten 493 bis 498 oder aus der DE-A 10 2004 010 155, US 3,544,500, US 4,421,660, der WO-A 2006/072464 oder der WO-A 2010/118961.

Die Fixierung der organischen und der anorganischen Domänen der Kompositpartikel sowie die Bereitstellung stabiler Kompositpartikel bereiten allerdings Probleme. Denn die anorganischen Partikel oder deren Ausgangsstoffe und die organischen Monomere bzw. die organischen Polymermatrices haben für gewöhnlich unterschiedliche Polaritäten und neigen dazu, sich voneinander zu separieren bzw. sich jeweils untereinander zu agglomerieren.

Tritt eine derartige Agglomeration vor oder während der Herstellung der Kompositpartikel auf, so werden beispielsweise die agglomerierten anorganischen Partikel im Zuge der Polymerisation der organischen Monomere von der organischen Polymermatrix eingekapselt, so dass keine gleichmäßige Fixierung anorganischer Partikel auf der organischen Polymermatrix stattfindet und somit letztlich keine chemisch einheitlich aus organischen und anorganischen Domänen aufgebauten Kompositpartikel entstehen. Entsprechende Mischungen liegen in Lösungsmitteln nicht als kolloidale Primärteilchen vor. Es kann sogar vorkommen, dass die anorganischen Partikel und die organische Polymermatrix als Abmischung nebeneinander vorliegen.

Aber auch in Kompositpartikeln, die einheitlich aus anorganischen und organischen Domänen aufgebaut sind, kann es zu einer Agglomeration der anorganischen bzw. organischen Domänen kommen, was zu einer unzureichenden Lagerstabilität insbesondere von gelösten, emulgierten oder dispergierten Kompositpartikeln führt und sich durch Gelierung oder Stippenbildung äußert. Insbesondere bei höheren Temperaturen, beispielsweise ab 40°C, tritt eine derartige Agglomeration auf. Ebenso neigen wässrige Dispersionen von ausschließlich aus anorganischen Bausteinen aufgebaute Partikeln, wie beispielsweise kolloides Silica oder Organopolysiloxane, bei höheren Temperaturen, beispielsweise bei 70°C, oder sogar schon bei Raumtemperatur zur Agglomeration.

Agglomerierte Kompositpartikel haben nicht mehr die gewünschten anwendungstechnischen Eigenschaften oder sind sogar gänzlich unbrauchbar. Um beispielsweise stabile wässrige Dispersionen von Kompositpartikeln bereitzustellen, werden üblicherweise Emulgatoren, Schutzkolloide oder spezielle Additive als Stabilisatoren zugesetzt, wie beispielsweise die in der DE-A 10 2004 010 155 empfohlenen hydroxygruppenhaltigen Alkylamino-Verbindungen.

Zur Lösung der vorgenannten Probleme wurden in der WO-A 2009/112370 Kompositpartikel vorgeschlagen, die durch Kondensation von Siloxanen oder Polysiloxanen in Gegenwart von beispielsweise Silan-, Amin- oder Epoxy-Gruppen enthaltenden Polymeren hergestellt wurden. Allerdings weisen hochfeststoffhaltige wässrige Dispersionen der so erhältlichen Kompositpartikel hohe Viskositäten auf, so dass sie nur noch schwer zu handhaben sind. Schließlich bereitet es auch besondere Schwierigkeiten, Kompositdispersionen mit hohen Feststoffgehalten in stabiler Form bereitzustellen. Die vorgenannten Probleme treten in besonderem Maße im Falle von wässrigen Kompositdispersionen mit Feststoffgehalten über 30% auf.

Aufgabe der vorliegenden Erfindung war es, Verfahren zur Herstellung von modifizierten Kompositpartikeln bereitzustellen, mit denen die oben genannten Nachteile vermieden werden. Insbesondere sollten also modifizierte Kompositpartikel zugänglich werden, die auch in Form von Dispersionen mit hohen Feststoffgehalten lagerstabil sind und eine niedrige Viskosität aufweisen.

Die Aufgabe wurde überraschenderweise gelöst, indem feinteilige anorganische Feststoffe an organische Polymere fixiert wurden, beispielsweise im Zuge der Kondensation von Siliciumverbindungen in Gegenwart von organischen Polymeren, und anschließend in Gegenwart der so erhaltenen Kompositpartikel ethylenisch ungesättigte Monomere polymerisiert wurden, wobei die erfindungsgemäßem modifizierten Kompositpartikel gebildet wurden.

Bekannt sind Kompositpartikel, die durch radikalisch initiierte Copolymerisation ethylenisch ungesättigter, organischer Monomere und ethylenisch ungesättigter, anorganischer Partikel, wie beispielsweise die in der EP-A 1620271 vorgeschlagenen ethylenisch ungesättigten Siloxane, erhalten werden.

Die WO-A 2007/057382 beschreibt Silan-modifizierte Polyvinylalkohole, die durch radikalisch initiierte Polymerisation von ethylenisch ungesättigten, silanhaltigen Monomeren in Gegenwart von Polyvinylalkoholen erhalten werden.

Aus der DE-A 102007038333 sind Zusammensetzungen bekannt, die durch Kondensation von Siliciumverbindungen in Gegenwart von Polyvinylalkoholen hergestellt wurden, wobei die dabei entstandenen anorganischen Partikel allerdings nicht auf Polyvinylalkoholen fixiert wurden, sondern neben diesen in der Zusammensetzung als Abmischung vorlagen.

Die EP-A 1243619 offenbart Kompositmaterialien bestehend aus organischen Domänen, wie Polyacrylsäure, und anorganischen Domänen, beispielsweise Natriumsilikate oder kolloidale Kieselsäure, wobei die organischen und anorganischen Domänen durch ionische Wechselwirkungen mit zweiwertigen Metallkationen verknüpft sind, so dass die Kompositmaterialien als Aggregate der polymeren Domänen in Form von Gelen vorliegen.

Gegenstand der Erfindung sind Verfahren zur Herstellung von modifizierten Kompositpartikeln, indem
A) ein oder mehrere feinteilige anorganische Feststoffe und ein oder mehrere organische Polymere in einem Lösungsmittel oder einem Gemisch von mehreren Lösungsmitteln gemischt werden, wobei feinteilige anorganische Feststoffe an organische Polymere fixiert werden und somit Kompositpartikel gebildet werden, und
   wobei die organischen Polymere basieren auf
   a) einem oder mehreren ethylenisch ungesättigten Monomeren mit einer oder mehreren weiteren funktionellen Gruppen ausgewählt aus der Gruppe umfassend Carbonsäuregruppen oder deren Derivate, Silan-, Sulfonsäure-, Sulfat-, Phosphat-, Phosphonat-, Iso-Cyanat-, Amin-, quaternisierte Amin-, Hydrazin-, Epoxy-, Ether-, Hydroxy- oder CO-Gruppen, und
   b) einem oder mehreren von den Monomeren a) verschiedenen ethylenisch ungesättigten Monomeren, dadurch gekennzeichnet, dass anschließend
B) in Gegenwart der Kompositpartikel aus Schritt A) ein oder mehrere ethylenisch ungesättigte Monomere polymerisiert werden.

Ein weiterer Gegenstand der Erfindung sind modifizierte Kompositpartikel erhältlich nach den vorgenannten Verfahren.

Das Fixieren der feinteiligen anorganischen Feststoffe an die organischen Polymere bedeutet insbesondere, dass die feinteiligen anorganischen Feststoffe über chemische Bindungen, wie ionische oder insbesondere kovalente Bindungen, mit organischen Polymeren verknüpft werden. Maßgeblich und erforderlich for dieses Fixieren sind die Monomer-Einheiten a) der organischen Polymere. Die feinteiligen anorganischen Feststoffe sind im Wesentlichen in statistischer Verteilung auf der Polymerkette des organischen Polymers des jeweiligen Kompositpartikels von Schritt A) fixiert. Die chemischen Bindungen werden im Allgemeinen durch Kondensationsreaktionen zwischen den feinteiligen anorganischen Feststoffen und den organischen Polymeren ausgebildet. Bei einer Kondensationsreaktion wird ein feinteiliger anorganischer Feststoff mit einem organischen Polymer verknüpft, Wobei ein einfaches Molekül, meist Wasser, abgespaltet wird.

Bei den feinteiligen anorganischen Feststoffen handelt es sich vorzugsweise um Metalle oder Metallverbindungen, wie Metalloxide oder Metallsalze, Halbmetalle oder Halbmetallverbindungen, wie Halbmetalloxide oder Halbmetallsalze, Geeignete Metalle sind beispielsweise Edelmetallkolloide, wie Kolloide von Palladium, Silber, Ruthenium, Platin, Gold oder Rhodium oder deren Legierungen. Metalloxide sind beispielsweise die Oxide von Titan, Zirkonium, Zinn, Aluminium, Barium, Magnesium, Eisen, Chrom, Antimon, Wismut, Zink, Nickel, Cobalt, Kupfer, Yttrium oder Cer oder deren Hydroxyoxide. Beispiele für Metallsalze sind Metallsulfid, Metallsulfate, Carbonate, Metallcarbonate, Phosphate, Silikate, Aluminate oder Borate. Entsprechende Beispiele sind Sulfide von Eisen, Zinn, Quecksilber, Cadmium, Zink, Kupfer, Silber, Nickel, Cobalt, Mangan, Chrom, Titan, Zirkon, Antimon oder Wismut: Sulfate, Carbonate, Phosphate, Aluminate oder Borate von (Erd)alkalimetallen, Zink, Zirkonium, Eisen, Aluminium oder Zinn; Silikate, wie Lithiumorthosilikat, Calcium-/Magnesiumorthosilikat, Aluminiumorthosilikat, Eisen-(II)-orthosilikat, Eisen-(III)-orthosilikat, Magnesiumorthosilikat, Zinkorthosilikat, Zirkonium-(III)-orthosilikat, Zirkonium-(IV)-orthosilikat, Metasilikate, wie Lithiummetasilikat, Calcium-/Magnesiummetasilikat, Calciummetasilikat, Magnesiummetasilikat, Zinkmetasilikat, Schichtsilikate, wie Natriumaluminiumsilikat oder Natriummagnesiumsilikat.

Als bevorzugte Halbmetallverbindung sei Siliziumdioxid genannt. Siliziumdioxid kann in amorpher Form und/oder in unterschiedlichen Kristallstrukturen vorliegenden. Geeignetes Siliziumdioxid ist auch unter den Handelsnamen Aerosil®, Nalco®, Levasil®, Ludox®, Nyacol®, Bindzil® und Snowtex® bekannt. Siliziumdioxid kann beispielsweise in Form von Wasserglas oder Silica-Solen vorliegen.

Die Herstellung der feinteiligen anorganischen Feststoffe ist dem Fachmann bekannt und erfolgt beispielsweise durch Fällungareaktionen oder chemische Reaktionen in der Gasphase (vgl. hierzu E. Matijevic, Chem. Mater. 1993, 5, Seiten 412 bis 426; Ullmann's Encyclopedia of Industrial Chemistry, Vol. A 23, Seiten 583 bis 660, Verlag Chemie, Weinheim, 1992; D. F. Evans, H. Wennerström in The Colloidal Domain, Seiten 363 bis 405, Verlag Chemie, Weinheim, 1994 und RJ. Hunter in Foundations of Colloid Science, Vol. I, Seiten 10 bis 17, Clarendon Press, Oxford, 1991).

In einer bevorzugten Ausführungsform wird Schritt A) der vorliegenden erfindung ausgeführt, indem ein oder mehrere Siliciumverbindungen
in einem Lösungsmittel oder einem Gemisch von mehreren Lösungsmitteln
in Gegenwart der vorgenannten organischen Polymere kondensiert werden,
wobei die Siliciumverbindungen ausgewählt werden aus der Gruppe umfassend
α) Verbindungen der allgemeinen Formel

   (RO)ₙSiR¹₄₋ₙ (1),

   worin
   R einen gegebenenfalls substituierten Alkyl- oder Arylrest mit 1 bis 20 Kohlenstoffatomen oder ein Wasserstoffatom,
   R¹ einen gegebenenfalls substituierten Kohlenwasserstoffrest oder ein Wasserstoffatom bedeutet, und
   n einen Wert von 1 bis 4 annimmt, und
β) ein oder mehrere Kondensationsprodukte der Verbindungen der Formel (1).

In den Siliciumverbindungen der Formel (1) sind die Reste R vorzugsweise nicht substituiert. Besonders bevorzugt steht der Rest R der Formel (1) für Methyl, Ethyl oder Propyl, Cyclohexyl, Phenyl, am meisten bevorzugt für Methyl oder Ethyl.

Vorzugsweise steht der Rest R¹ für einen Alkyl- oder Arylrest, besonderes bevorzugt für Methyl, Ethyl, Propyl, Cyclohexyl, Isooctyl oder Phenyl und am meisten bevorzugt für Methyl oder Ethyl.

Vorzugsweise steht der Rest R¹ auch für eine Gruppe R²X,
in der der Rest R² einen Gegebenenfalls substituierten Alkylen-Rest mit 1 bis 20 Kohlenstoffatomen, vorzugsweise mit 1 bis 6 Kohlenstoffatomen bedeutet,
in dem einander nicht benachbarte Methyleneinheiten durch Gruppen -O- ersetzt sein können, und
X über eine kovalente Bindung an den Rest R² gebunden ist und für einen Aminorest NHR³, einen Epoxyrest CR⁴(O)CR⁵R⁶, einen Urethanrest NR³-C(=O)OR³, einen Harnstoffrest NR³-C(=O)NR³R⁴, ein Phosphorsäurerest P(=O)(OH)₂, ein Anhydridrest C(=O)0(O=)CR³ oder einen Carbonsäurerest steht, wobei
R³ ein Wasserstoffatom oder einen gegebenenfalls substituierten Alkyl-, Aryl- oder Aminoalkylrest mit 1 bis 10 Kohlenstoffatomen bedeutet,
R⁹, R⁵, R⁶ ein Wasserstoffatom oder einen gegebenenfalls substituierten Alkyl- öder Arylrest mit 1 bis 10 Kohlonstoffatomen bedeutet,
wobei die jeweiligen Reste R², R³, R⁴, R⁵ und R⁶ ihre Werte jeweils unabhängig voneinander annehmen, und
wobei die Gruppe R²X über ein Kohlenstoffatom des Restes R² an das Siliciumatom der Formel (1) gebunden ist.

Vorzugsweise sind die Reste R² der Gruppe R²X nicht substituiert. Besonders bevorzugt steht R² für einen Alkylen-Rest mit 1 bis 6 Kohlenstoffatomen, am meisten bevorzugt Methylen, Ethylen oder Propylen.

Vorzugsweise steht R³ für ein Wasserstoffatom, einen Alkyl-, Aryl- oder Aminoalkylrest mit 1 bis 6 Kohlenstoffatomen, besonders bevorzugt Wasserstoffatom, 2-Aminoethyl; Phenyl, Cyclohexyl, Methyl, Ethyl, Propyl oder Butyl.

Die Reste R⁴, R⁵, R⁶ stehen vorzugsweise für ein Wasserstoffatom.

Vorzugsweise nimmt n einen Wert von 2 bis 4, besonders bevorzugt den Wert 3 oder 4 an.

Die einzelnen Reste R, R¹, R², R³, R⁴, R⁵, R⁶ bzw. X und der Wert n der Siliciumverbindungen der Formel (1) weisen ihre Bedeutungen jeweils unabhängig voneinander auf. In allen Ausführungsformen der Formel (1) ist das Siliciumatom jeweils vierwertig.

Beispiele für Siliciumverbindungen der Formel (1) sind Tetramethoxysilan, Tetraethoxysilan, Methyltrimethoxysilan, Methyltriethoxysilan, Dimethyldimethoxysilan, Dimethyldiethoxysilan, Isooctyltrimethoxysilan, Isooctyltriethoxysilan, (Cyclohexyl)methyldimethoxysilan, Dicyclopentyldimethoxysilan oder Phenyltriethoxysilan. Bevorzugte Silane der Formel (1) sind Tetramethoxysilan, Tetraethoxysilan, Methyltrimethoxysilan, Methyltriethoxysilan, Isooctyltrimethoxysilan, Isooctyltriethoxysilan oder Phenyltriethoxysilan. Besonders bevorzugt sind Tetramethoxysilan, Tetraethoxysilan, Methyltrimethoxysilan, Methyltriethoxysilan.

Weitere Beispiele für Siliciumverbindungen der Formel (1) sind (3-Aminopropyl)triethoxxsilan, (3-Aminopropyl)trimethoxysilan, N-(2-Aminoethyl)(3-Aminopropyl)triethoxysilan, N-(2-Aminoethyl)(3-Aminopropyl)trimethoxysilan, N-(2-Aminoethyl)(3-Aminopropyl)methyldimethoxysilan, 3-(Triethoxysilyl)propylbernsteinsäureanhydrid, N-Cyclohexylaminomethylmethyldiethoxysilan, N-(3-(Triethoxysilyl)propyl)-methylurethan, N-(3-(Trimethoxysilyl)propyl)-methylurethan, N-(3-(Triethoxysilyl)propyl)-harnstoff, N-(3-(Trimethoxysilyl)propyl)-harnstoff, (3-Glycidoxypropyl)triethoxysilan, und (3-Glycidoxypropyl)trimethoxysilan. Bevorzugt sind auch (3-Aminopropyl)-triethoxysilan oder (3-Glycidoxypropyl)triethoxysilan.

Vorzugsweise wird bei der Herstellung der Kompositpartikel des Schrittes A) mindestens eine Siliciumverbindung der Formel (1) eingesetzt, bei der n einen Wert von 1 bis 3 annimmt, d.h. bei der das Siliciumatom nicht ausschließlich mit Alkoxy-, Aryloxyoder Hydroxygruppen substituiert ist.

Gegebenenfalls können bei der Kondensation von Siliciumverbindungen der Formel (1) zur Herstellung der Kompositpartikel zusätzlich ein oder mehrere ethylenisch ungesättigte Siliciumverwindungen der allgemeinen Formel (2) R⁷SiR⁸₀₋₂(OR⁹)₁₋₃ eingesetzt werden, worin R⁷ die Bedeutung CH₂=CR¹⁰-(CH₂)₀₋₁ oder CH₂=CR¹⁰CO₂(CH₂)₁₋₃ hat, R⁸ die Bedeutung C₁- bis C₃-Alkylrest, C₁- bis C₃-Alkoxyrest oder Halogen, vorzugsweise Cl oder Br hat, R⁹ ein unverzweigter oder verzweigter, gegebenenfalls substituierter Alkylrest mit 1 bis 12 C-Atomen, vorzugsweise 1 bis 3 C-Atomen, ist oder ein Acylrest mit 2 bis 12 C-Atomen ist, wobei R⁹ gegebenenfalls durch eine Ethergruppe unterbrochen sein kann, und R¹⁰ für H oder CH₃ steht.

Bevorzugte ethylenisch ungesättigte Siliciumverbindungen der Formel (2) sind γ-Acryl- bzw. γ-Methacryloxypropyltri(alkoxy)-silane, α-Methacryloxymethyltri(alkoxy)silane, γ-Methacryloxypropyl-methyldi(alkoxy)silane; Vinylsilane wie Vinylalkyldi(alkoxy)silane und Vinyltri(alkoxy)silane, wobei als Alkoxygruppen beispielsweise Methoxy-, Ethoxy-, Methoxyethylen, Ethoxyethylen-, Methoxypropylenglykolether- bzw. Ethoxypropylenglykolether-Reste eingesetzt werden können. Beispiele für bevorzugte ungesättigte Siliciumverbindungen der Formel (2) sind 3-Methacryloxypropyltrimethoxysilan, 3-Methacryloxypropylmethyldimethoxysilan, Vinyltrimethoxysilan, Vinylmethyldimethoxysilan, Vinyltriethoxysilan, Vinylmethyldiethoxysilan, Vinyltripropoxysilan, Vinyltriisopropoxysilan, Vinyltris-(1-methoxy)-isopropoxysilan, Vinyltributoxysilan, Vinyltriacetoxysilan, Methacryloxymethyltrimethoxysilan, 3-Methacryloxypropyl-tris(2-methoxyethoxy)silan, Vinyltrichlorsilan, Vinylmethyldichlorsilan, Vinyltris-(2-methoxyethoxy)silan, Trisacetoxyvinylsilan, Allylvinyltrimethoxysilan, Allyltriacetoxysilan, Vinyldimethylmethoxysilan, Vinyldimethylethoxysilan, Vinylmethyldiacetoxysilan, Vinyldimethylacetoxysilan, Vinylisobutyldimethoxysilan, Vinyltriisopropyloxysilan, Vinyltributoxysilan, Vinyltrihexyloxysilan, Vinylmethoxydihexoxysilan, Vinyltrioctyloxysilan, Vinyldimethoxyoctyloxysilan, Vinylmethoxydioctyloxysilan, Vinylmethoxydilauryloxysilan, Vinyldimethoxylauryloxysilan sowie auch Polyethylenglykolmodifizierte Vinylsilane.

Als ethylenisch ungesättigte Siliciumverbindungen der Formel (2) werden besonders bevorzugt Vinyltrimethoxysilan, Vinylmethyldimethoxysilan, Vinyltriethoxysilan, Vinylmethyldiethoxysilan, Vinyltris-(1-methoxy)-isopropoxysilan, Methacryloxypropyl-tris(2-methoxyethoxy)silan, 3-Methacryloxypropyltrimethoxysilan, 3-Methacryloxypropylmethyldimethoxysilan und Methacryloxymethyltrimethoxysilan sowie deren Gemische.

Zusätzlich können bei der Kondensation von Siliciumverbindungen der Formel (1) zur Herstellung der Kompositpartikel ein oder mehrere ethylenisch ungesättigte Siliciumverbindungen der allgemeinen Formel (3) CH₂=CR¹¹-CO-NR¹²-R¹³-SiR¹⁴ₙ-(R¹⁵)₃₋ₘ eingesetzt werden, worin n = 0 bis 4, m = 0 bis 2, R¹¹ entweder H oder eine Methyl-Gruppe ist, R¹² H oder eine Alkyl-Gruppe mit 1 bis 5 C-Atomen ist, R¹³ eine Alkylen-Gruppe mit 1 bis 5 C-Atomen oder eine bivalente organische Gruppe ist, in welcher die Kohlenstoffkette durch ein O- oder N-Atom unterbrochen wird, R¹⁴ eine Alkyl-Gruppe mit 1 bis 5 C-Atomen ist, R¹⁵ eine Alkoxy-Gruppe mit 1 bis 40 C-Atomen ist, welphe mit weiteren Heterocyclen substituiert sein können. In Siliciumverbindungen der Formel (3), in denen 2 oder mehrere Gruppen R¹¹ oder R¹⁵ vorkommen, können diese identisch oder unterschiedlich sein.

Beispiele für Siliciumverbindungen der Formel (3) sind: 3-(Meth)acrylamido-propyltrimethoxysilan, 3-(Meth)acrylamidopropyltriethoxysilan, 3-(Meth)acrylamido-propyltri(β-methoxyethoxy)silan, 2-(Meth)acrylamido-2-methylpropyltrimethoxysilan, 2-(Meth)acrylamido-2-methylethyltrimethoxysilan, N-(2-(Meth)acrylamido-ethyl)aminopropyltrimethoxysilan, 3-(Meth)-acrylamido-propyltriacetoxysilan, 2-(Meth)acrylamido-ethyltrimethoxysilan, 1-(Meth)acrylamido-methyltrimethoxysilan, 3-(Meth)acrylamido-propylmethyldimethoxysilan, 3-(Meth)acrylamido-propyldimethylmethoxysilan, 3-(N-Methyl-(Meth)acrylamido)-propyltrimethoxysilan, 3-((Meth)acrylamido-methoxy)-3-hydroxypropyltrimethoxysilan, 3-((Meth)acrylamido-methoxy)-propyltrimethoxysilan, N,N-Dimethyl-N-trimethoxysilylpropyl-3-(Meth)acrylamido-propylamoniumchlorid und N,N-Dimethyl-N-trimethoxysilylpropyl-2-(Meth)acrylamido-2-methylpropylammonium-chlorid,

Bei Einsatz der Siliciumverbindungen der Formel (1) in Schritt A) werden im Zuge der Kondensation vorzugsweise ≥ 30 %, besonders bevorzugt ≥ 40 % und am meisten bevorzugt 70 bis 80 % der hydrolisierbaren oder kondensierbaren Bindungen der Siliciumverbindungen der Formel (1) und gegebenenfalls der Formeln (2) und (3), bezogen auf die Gesamtzahl der hydrolisierbaren oder kondensierbarer Bindungen der genannten Siliciumverbindungen, mit den organischen Polymeren oder den eingesetzten Silicium-verbindungen oder deren Kondensationsprodukten verknüpft. Hydrolysierbare Bindungen sind insbesondere die Alkoxygruppen RO der Formel (1) oder die Alkoxygruppen OR⁹ der Formel (2). Kondensierbare Bindungen sind insbesondere die an Siliciumatome gebundenen OH-Gruppen.

Bei den Kondensationsprodukten β) handelt es sich vorzugsweise um Organopolysiloxane, die aus Einheiten der allgemeinen Formel

R¹ₓSi(OR)_{y}O_{(1-x-y)/2} (4)

aufgebaut sind, worin
x 0, 1, 2 oder 3 und y 0, 1 oder 2 ist,
mit der Maßgabe, dass die Summe x+y≤3 ist,
R¹ gleich oder verschieden sein kann und die oben für die Formel (1) angegebenen Bedeutungen annehmen kann, und
R gleich oder verschieden seit kann und die oben für die Formel (1) angegebenen Bedeutungen annehmen kann.

Als Reste R bzw.. R¹ sind dieselben Reste bevorzugt, besonders bevorzugt und am meisten bevorzugt, die oben für die Formel (1) entsprechend aufgeführt sind.

Die Partikelgröße der Organopolysiloxane beträgt vorzugsweise von 4 bis 900 nm, besonders bevorzugt 4 bis 40 nm und am meisten bevorzugt 4 bis 30 nm (bestimmt mittels Transmissionselektronenmikroskopie; mit dem Gerät Libra 120 der Firma Zeiss).

Die Siliciumverbindungen α), die Kondensationsprodukte β) sowie die Siliciumverbindungen der Formeln (2) und (3) werden im folgenden auch gemeinsam als Silicium-Komponenten bezeichnet.

Die Siliciumverbindungen α) und/oder die Kondensationsprodukte β) werden insgesamt bei der Herstellung der Kompositpartikel vorzugsweise zu 20 bis 100 Gew.-% und besonders bevorzugt zu 60 bis 80 Gew.-% eingesetzt, jeweils bezogen auf die Trockenmasse der insgesamt eingesetzten Menge an Silicium-Komponenten.

Die Siliciumverbindungen der Formeln (2) bzw. (3) werden jeweils unabhängig voneinander vorzugsweise zu 0 bis 40 Gew.-% eingesetzt, jeweils bezogen auf die Trockenmasse der insgesamt eingesetzten Menge an Silicium-Komponenten.

Die Silicium-Komponenten sind handelsübliche Produkte oder nach gängigen Methoden herstellbar, wie beispielsweise in Noll, Chemie und Technologie der Silikone, 2. Auflage 1968, Weinheim, oder in Houben-Weyl, Methoden der organischen Chemie, Band E20, Georg Thieme Verlag, Stuttgart (1987) beschrieben.

Als feinteilige anorganische Feststoffe sind solche besonders geeignet, deren Löslichkeit in Wasser bei 20°C und Atmosphärendruck (1 atm = 1,013 bar absolut) ≤ 1 g/l, bevorzugt ≤ 0,1 g/l und insbesondere bevorzugt ≤ 0,01 g/l ist.

Bei der Herstellung der Kompositpartikel der Stufe A) beträgt der Anteil der feinteiligen anorganischen Feststoffe vorzugsweise 2 bis 97 Gew.-%, besonders bevorzugt 20 bis 95 Gew.-%, am meisten bevorzugt 30 bis 70 Gew.-%, jeweils bezogen auf die Trockenmasse der insgesamt eingesetzten Menge an organischen Polymeren und feinteiligen anorganischen Feststoffe.

Als Lösungsmittel für das erfindungsgemäße Verfahren können Wasser oder ein organisches Lösungsmittel, Gegebenenfalls in Kombination mit Wasser, oder ein Lösungsmittelgemisch aus mehreren organischen Lösungsmitteln, gegebenenfalls in Kombination mit Wasser, eingesetzt werden. Ein Einsatz von Wasser als Lösungsmittel oder als Komponente des Lösungsmittelgemisches ist nicht zwingend erforderlich, da das in den kommerziell erhältlichen Ausgangsmaterialien enthaltene Restwasser zur Ausführung des erfindungsgemäßen Verfahrens ausreichend ist.

Geeignete organische Lösungsmittel sind beispielsweise Alkohole mit 1 bis 6C-Atomen, wie Methanol, Ethanol, n-Propanol oder i-Propanol, Ketone, wie Aceton oder Methylethylketon, Ester, wie Methylacetat, Ethylacetat, Propylacetat oder Butylacetat. Bevorzugte Lösungsmittel sind Wasser oder i-Propanol. Bevorzugte Lösungsmittelgemische enthalten Wasser und i-Propanol.

Die organischen Polymere sind im jeweiligen erfindungsgemäßen Lösungsmittel oder Lösungsmittelgemisch bei einer beliebigen Temperatur innerhalb des Temperaturbereichs von 1 bis 100°C, vorzugsweise von 20 bis 60°C, und bei einem beliebigen pH-Wert zwischen 2 und 12 vorzugsweise zu mindestens 1 g pro Liter Lösungsmittel oder Lösungsmittelgemisch organischlöslich. Die erfindungsgemäßen Lösungen mit einem Festgehalt an organischen Polymere von 10 Gew.-% weisen eine Trübung von vorzugsweise ≤ 600 EBC auf (gemäß Formazinstandard nach DIN 38404; bestimmt mit dem Trübungsmessgerät Model TA6FS/Modell 251 der Firma Metrisa GmbH). Auf Grund dieser Organischkeitseigenschaften wird eine Separation und Aggregation der organischen Polymere im Zuge der Herstellung der Kompositpartikel unterbunden.

Die organischen Polymere sind zugänglich durch radikalisch initiierte Polymerisation von ein oder mehreren Monomeren a) und ein oder mehreren Monomeren b).

Die bevorzugten funktionellen Gruppen der Monomere a) werden ausgewählt aus der Gruppe umfassend Carbonsäuregruppen oder deren Derivate, wie Ester, Amide, Nitrile oder Anhydride, Silan-, Sulfonsäure-, Epoxy-, Ether-, Hydroxy- oder CO-Gruppen.

Bei Derivaten von Carbonsäuregruppen handelt es sich beispielsweise um Ester, Amide, Nitrile oder Anhydride.

Üblicherweise haben die Monomere a) 2 bis 15 C-Atome.

Beispiele für Monomere a) sind ethylenisch ungesättigte Mono- und Dicarbonsäuren, vorzugsweise Acrylsäure, Methacrylsäure, Crotönsäure, Fumarsäure und Maleinsäure ethylenisch ungesättigte Carbonsäureamide und -nitrile, vorzugsweise Acrylamid und Acrylnitril; Mono- und Diester der Fumarsäure und Maleinsäure wie die Diethyl- und Disopropylester, sowie Maleinsäureanhydrid, Ethylenisch ungesättigte Sulfonsäuren bzw. deren Salze, vorzugsweise Vinylsulfonsäure, 2-Acrylamido-2-methyl-propansulfonsäure; ethylenisch ungesättigte Epoxide, wie Glycidylmethacrylat oder Glycidylacrylat; ethylenisch ungesättigte Silane wie die Siliciumverbindungen der oben angegebenen Formel (2) oder (3), beispielsweise Acryloxypropyltri(alkoxy)- oder Methacryloxypropyltri(alkoxy)-Silane, Vinyltriälkoxysilane, Vinylmethyldialkoxysilane, Vinyldimethylfluorosilan, Styrolethyltrialkoxysilane, wobei als Alkoxygzuppen beispielsweise Methoxy-, Ethoxy- und Ethoxypropylenglykolether-Reste enthalten sein können; ethylenisch ungesättigte Hydroxy- öder Keto-Verbindungen, beispielsweise Methacrylsäure- und Acrylsäurehydröxyalkylester wie Hydroxyethyl-, Hydroxypropyl- oder Hydroxybutylacrylat oder -methacrylat sowie Verbindungen wie Diacetonacrylamid und Acetylacetoxyethylacrylat oder -methacrylat; oder Vinylether, wie Methyl-, Ethyl- oder isoButylvinylether.

Besonders bevorzugte Monomere a) sind Ethylenisch ungesättigte Monocarbonsäuren, wie insbesondere Acrylsäure, Methacrylsäure oder Crotonsäure, Vinyltrialkoxysilane, wie insbesondere Vinyltriethoxysilan, Hydroxyethyl- oder Hydroxypropylacrylat oder -methacrylat.

Zur Herstellung der organischen Polymere werden vorzugsweise 0,01 bis 30 Gew.-%, besonders bevorzugt 0,1 bis 20 Gew.-% und am meisten bevorzugt 0,1 bis 12 Gew.-% Monomere a) eingesetzt; bezogen auf das Gesamtgewicht der insgesamt bei der Polymerisation zur Herstellung der organischen Polymere eingesetzten Monomere.

Ethylenisch ungesättigte Silane werden hierbei zu vorzugsweise 0,01 bis 5 Gew.-%, besonders bevorzugt 0,01 bis 3 Gew.-%, mehr bevorzugt 0,1 bis 2 Gew.-% und am meisten bevorzugt 0,2 bis 1,5 Gew.-% eingesetzt, bezogen auf das Gesamtgewicht der insgesamt bei der Polymerisation zur Herstellung der organischen Polymere eingesetzten Monomere.

Ethylenisch ungesättigte Monocarbonsäuren werden hierbei zu vorzugsweise 1 bis 12 Gew.-%, besonders bevorzugt 2 bis 10 Gew.-% und am meisten bevorzugt 3 bis 8 Gew.-% eingesetzt, bezogen auf das Gesamtgewicht der insgesamt bei der Polymerisation zur Herstellung der organischen Polymere eingesetzten Monomere. Der Einsatz der erfindungsgemäßen Mengen an ethylenisch ungesättigten Carbonsäuren führt zu modifizierten Kompositpartikeln, die insbesondere auch bei hohen Feststoffgehalten besonders lagerstabil sind bzw. die gewünschte Viskosität aufweisen.

Bei den ethylenisch ungesättigten Monomeren b) handelt es sich im Allgemeinen um ein oder mehrere Monomeren ausgewählt aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine und Diene, Vinylaromaten und Vinylhalogenide.

Unter den Monomeren b) bevorzugte Vinylester sind Vinylacetat, Vinylpropionat, Vinylbutyrat, Vinyl-2-ethylhexanoat, Vinyllaurat, 1-Methylvinylacetat, Vinylpivalat und Vinylester von alpha-verzweigten Monocarbonsäuren mit 5 bis 13 C-Atomen, beispielsweise VeoVa9R oder VeoVa10R (Handelsnamen der Firma Shell). Besonders bevorzugt ist Vinylacetat.

Bevorzugte Methacrylsäureester oder Acrylsäureester sind Ester von unverzweigten oder verzweigten Alkoholen mit 1 bis 15 C-Atomen wie Methylacrylat, Methylmethacrylat, Ethylacrylat, Ethylmethacrylat, Propylacrylat, Propylmethacrylat, n-Butylacrylat, n-Butylmethacrylat, 2-Ethylhexylacrylat, Norbornylacrylat. Besonders bevorzugt sind Methylacrylat, Methylmethacrylat, n-Butylacrylat und 2-Ethylhexylacrylat.

Bevorzugte Olefine oder Diene sind Ethylen, Propylen und 1,3-Butadien. Bevorzugte Vinylaromaten sind Styrol und Vinyltoluol. Ein bevorzugtes Vinylhalogenid ist Vinylchlorid.

Die bevorzugten Monomere b) umfassen also keine Monomere a).

Beispiele für geeignete organische Polymere sind (Meth)acrylat-Polymerisate, Styrol-(Meth)acrylat-Polymerisate, Vinylester-Polymerisate, die jeweils eine oder mehreren unterschiedliche Einheiten an Monomeren a) enthalten, deren weiteren funktionellen Gruppen ausgewählt aus der Gruppe umfassend Carbonsäuregruppen oder deren Derivate, wie Ester, Amide, Nitrile oder Anhydride, Silan-, Sulfonsäure-, Epoxy-, Ether-, Hydroxy- oder CO-Gruppen.

Bevorzugt werden als organische Polymere Polymerisate von Vinylestern, insbesondere Vinylacetat, mit 3 bis 12 Gew.-% von ethylenisch ungesättigten Carbonsäuren, wie Acrylsäure oder Methacrylsäure, und gegebenenfalls 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan; Polymerisate von Vinylestern, insbesondere Vinylacetat, mit 0,1 bis 3 Gew.-% von ethylenisch ungesättigten Silanen, wie Vinyltrimethoxysilan, Vinyltriethoxysilan, Vinyl-methyldimethoxysilan oder Vinylmethyldiethoxysilan, wobei die vorgenannten Polymerisate noch 5 bis 45 Gew.-% an Butylacrylat, VeoVa9, VeoVa10 oder Ethylen enthalten können, und wobei sich die Angaben in Gew.-% auf jeweils 100 Gew.-% aufaddieren.

Bevorzugt werden als organische Polymere auch Polymerisate von (Meth)acrylsäureestern, wie Methyl(meth)acrylat Und/oder n-Butyl(meth)acrylat, mit 3 bis 12 Gew.-% von ethylenisch ungesättigten Carbonsäuren, wie Acrylsäure oder Methacrylsäure, und gegebenenfalls 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan; Polymerisate von (Meth)acrylsäureestern, wie Methyl(meth)-acrylat und/oder n-Butyl(meth)acrylat, mit 0,1 bis 3 Gew.-% von ethylenisch ungesättigten Silanen, wie Vinyltrimethoxysilan, Vinyltriethoxysilan, Vinylmethyldimethoxysilan oder Vinylmethyldiethoxysilan, wobei die vorgenannten Polymerisate noch 0 bis 50 Gew.-%, insbesondere 0,1 bis 50 Gew.-% an Styrol enthalten können, und wobei sich die Angaben in Gew.-% auf jeweils 100 Gew.-% aufaddieren.

Die Monomerauswahl bzw. die Auswahl der Gewichtsanteile der Comonomere erfolgt dabei so, dass im allgemeinen eine Glasübergangstempetatur Tg von -60°C bis 120°C, vorzugsweise -50°C bis +100°C resultiert, Die Glasübergangstemperatur Tg der Polymerisate kann in bekannter Weise mittels Differential Scanning Calorimetry (DSC) ermittelt werden. Die Tg kann auch mittels der Fox-Gleichung näherungsweise vorausberechnet werden. Nach Fox T. G., Bull. Am. Physics Soc. 1, 3, page 123 (1956) gilt: 1/Tg = x1/Tg1 + x2/Tg2 + ... + xn/Tgn, wobei xn für den Massebruch (Gew.-%/100) des Monomeren n steht, und Tgn die Glasübergangstemperatur in Kelvin des Homopolymeren des Monomeren n ist. Tg-Werte für Homopolymerisate sind in Polymer Handbook 2nd Edition, J. Wiley & Sons, New York (1975) aufgeführt.

Die organischen Polymere auf Basis der Monomeren a) und b) können nach dem Fachmann bekannten Suspension-, Miniemulsion- oder, vorzugsweise, Emulsionspolymerisationsverfahren hergestellt werden, wie beispielsweise in der DE-A 102006050336 beschrieben. Das Emulsionspolymerisationsverfahren wird vorzugsweise bei einem pH-Wert zwischen 3 und 6,5 durchgeführt.

Zusätzlich zu den organischen Polymeren auf Basis der Monomere a) und b) können im erfindungsgemäßen Verfahren auch die in der WO-A 2009/112,370 aufgeführten funktionalisierten, teil- oder vollverseiften Polyvinylalkohole, silan-modifizierten Polyvinylalkohole, funktionalisierten Polyvilnylacetale oder natürlichen Polymere bzw. chemisch oder physikalisch modifizierten natürlichen Polymere wie auch kationische oder anionische Polyvinylalkohole, Polyvinylalkohole enthaltend Einheiten von Isopropenylacetat, VeoVa9, VeoVa10 oder Ethylen eingesetzt werden.

Bei der Herstellung der Kompositpartikel des Schrittes A) beträgt der Anteil der organischen Polymere vorzugsweise 3 bis 98 Gew.-%, besonders bevorzugt 5 bis 80 Gew.-% und am meisten bevorzugt 30 bis 60 Gew.-%, jeweils bezogen auf die Trockenmasse der insgesamt eingesetzten Menge an organischen Polymeren und feinteiligen anorganischen Feststoffe.

In Schritt A) können die feinteiligen anorganischen Feststoffe sowie die organischen Polymere in reiner Form oder in einem Lösungsmittel eingesetzt werden. Die feinteiligen anorganischen Feststoffe werden vorzugsweise in einem oder mehreren Lösungsmitteln, insbesondere in Wasser und gegebenenfalls einem zusätzlichen Lösungsmittel eingesetzt. Die feinteiligen anorganischen Feststoffe sowie die organischen Polymere können in einem Lösungsmittel komplett vorgelegt werden. Alternativ kann ein Teil der feinteiligen anorganischen Feststoffe sowie der organischen Polymere vorgelegt werden, und der verbleibende Rest der feinteiligen anorganischen Feststoffe und der organischen Polymere kann zugegeben werden. Werden die feinteiliegen anorganischen Feststoffe ganz oder teilweise vorgelegt und werden die organischen Polymere zeitlich später zugegeben, so kann gegebenenfalls eine Vorkondensation der feinteiligen anorganischen Feststoffe erfolgen, bevor eine Fixierung der dabei gebildeten Partikel auf den organischen Polymeren erfolgt. Vorzugsweise werden die organischen Polymere in einem Lösungsmittel oder einem Lösungsmittelgemisch vorgelegt und die feinteiligen anorganischen Feststoffe werden in reiner Form ganz oder teilweise während der Kondensation zugegeben.

Die Temperatur während der Durchführung von Schritt A) beträgt vorzugsweise 1 bis 100°C, besonders bevorzugt 10 bis 80°C und am meisten bevorzugt 20 bis 70°C. Schritt A) wird vorzugsweise während 1 bis 24 Stunden, besonders bevorzugt während 2 bis 12 Stunden ausgeführt.

Das Verfahren zur Herstellung der Kompositpartikel von Schritt A) wird bei pH-Werten von vorzugsweise 1 bis 14, besonders bevorzugt von 7 bis 12 und am meisten bevorzugt von 8 bis 10 ausgeführt. Für den Fall, dass die Siliciumverbindungen der Formel (1) eingesetzt werden, die einen oder mehrere Epoxyreste tragen, erfolgt die Herstellung der Kompositpartikel von Schritt A) vorzugsweise bei pH-Werten von 4 bis 7.

Die so erhältlichen Kompositpartikel von Schritt A) liegen in Form einer Dispersion vor und haben vorzugsweise einen Feststoffgehalt von 10 bis 55 Gew.-%, besonders bevorzugt von 20 bis 45 Gew.-%, und am meisten bevorzugt von 30 bis 40 Gew.-%.

Die Kompositpartikel von Schritt A) haben vorzugsweise eine Viskosität von 20 bis 2.000 mPas (Brookfield-Viskosität bei 25°C als 25 %ige Lösung in Wasser) .

Die Kompositpartikel voh Schritt A) können in Pulver überführt werden, insbesondere in Wasser redispergierbare Pulver, wie in der WO-A 2265663 beschrieben.

Die Kompositpartikel von Schritt A) in Form einer wässerigen Dispersion mit einem Festgehalt von 10 Gew.-% weisen eine Trübung von vorzugsweise ≤ 700 EBC, besonders bevorzugt ≤ 600 EBC, ganz besonders bevorzugt ≤ 400 EBC und am meisten bevorzugt ≤ 200 EBC auf (Bestimmung gemäß Formazinstandard nach DIN 38404 bei Raumtemperatur mit dem Trübungsmessgerät der Firma Metrisa GmbH: TA6FS/Model 251).

Die anorganischen Domänen der Kompositpartikel von Schritt A) haben mittlere Teilchengrößen von vorzugsweise 2 nm bis 800 nm, besonders bevorzugt von 4 nm bis 100 nm und am meisten bevorzugt von 5 nm bis 30 nm (bestimmt mit dem Transmissionselektronenmikroskop Libra 120 der Firma Zeiss).

Für Schritt B) des erfindungsgemäßen Verfahrens werden die ethylenisch ungesättigten Monomere vorzugsweise ausgewählt aus der Gruppe umfassend die weiter oben als Monomere a) und Monomere b) aufgeführten Monomere. Hierbei sind dieselben Monomere bevorzugt, besonders bevorzugt und am meisten bevorzugt, die weiter oben entsprechend aufgeführt sind.

Beispiele für bevorzugte ethylenisch ungesättigte Monomere in Schritt B) sind ein oder mehrere Vinylester von Carbonsäuren mit 1 bis 15 C-Atomen, ein oder mehrere Methacrylsäureester oder Acrylsäureester von Carbonsäuren mit unverzweigten oder verzweigten Alkoholen mit 1 bis 15 C-Atomen, ein oder mehrere Vinylaromaten, ein oder mehrere Olefine, ein oder mehrere ethylenisch ungesättigte Silane oder ein oder mehrere ethylenisch ungesättigte Monocarbonsäuren, welche jeweils die oben genannten bevorzugten, besonders bevorzugten oder am meisten bevorzugten Ausführungsformen annehmen können.

Gegebenenfalls können noch 0 bis 5 Gew.-%, insbesondere 0,1 bis 2 Gew.-%, bezogen auf das Gesamtgewicht der ethylenisch ungesättigten Monomere in Stufe B), Hilfsmonomere copolymerisiert werden. Beispiele für Hilfsmonomere sind ethylenisch ungesättigte Silikone, wie beispielsweise α,ω-Divinyl-Polydimethylsiloxane, α,ω-Di-(3-acryloxypropyl)-Polydimethylsiloxane, α,ω-Di-(3-methacryloxypropyl)-Polydimethylsiloxane, α-Monovinyl-Polydimethylsiloxane, α-Mono-(3-acryloxypropyl)-Polydimethylsiloxane, α-Mono-(acryloxymethyl)-Polydimethylsiloxane, α-Mono-(3-methacryloxypropyl)-Polydimethylsiloxan, 3-Acryloxy-2-hydroxypropyl polydimethylsiloxan oder Monoallylmonotrimethylsiloxy polydimethylsiloxan.

In Schritt B) werden vorzugsweise 10 bis 60 Gew.-%, besonders bevorzugt 15 bis 50 Gew.-% und am meisten bevorzugt 20 bis 50 Gew.-% ethylenisch ungesättigte Monomere eingesetzt, bezogen auf das Trockengewicht der in Schritt A) eingesetzten organischen Polymere und feinteiligen anorganischen Feststoffe.

Ethylenisch ungesättigte Silane werden hierbei zu vorzugsweise 0 bis 3 Gew.-%, besonders bevorzugt 0,01 bis 2 Gew.-% und am meisten bevorzugt 0,1 bis 1 Gew.-% eingesetzt, bezogen auf das Gesamtgewicht der in Schritt B) eingesetzten ethylenisch ungesättigten Momomere.

Ethylenisch ungesättigte Monocarbonsäuren werden hierbei zu vorzugsweise 0 bis 2 Gew.-%, besonders bevorzugt 0,05 bis 1,0 Gew.-% und am meisten bevorzugt 0,1 bis 0,5 Gew.-% eingesetzt, bezogen auf das Gesamtgewicht der in Schritt B) eingesetzten ethylenisch ungesättigten Monomere.

Besonders bevorzugt werden in Schritt B) als ethylenisch ungesättigte Monomere Monomerengemische umfassend ein oder mehrere Vinylester, insbesondere Vinylacetat, 0 bis 1 Gew.-%, insbesondere 0,1 bis 1 Gew.-% von einem oder mehreren ethylenisch ungesättigten Carbonsäuren, wie Acrylsäure, Methacrylsäure oder Crotonsäure, und gegebenenfalls 0 bis 2 Gew.-%, insbesondere 0,1 bis 2 Gew.-% von einem oder mehreren ethylenisch ungesättigten Silanen, wie Vinyltrimethoxysilan, Vinyltriethoxysilan, Vinylmethyldimethoxysilan oder Vinylmethyldiethoxysilan; ein oder mehrere Vinylester, insbesondere Vinylacetat, 0 bis 2 Gew.-%, insbesondere 0,1 bis 2 Gew.-% von ethylenisch ungesättigten Silanen, wie Vinyltrimethoxysilan, Vinyltriethoxysilan, Vinylmethyldimethoxysilan oder Vinylmethyldiethoxysilan, wobei gegebenenfalls noch 2 bis 40 Gew.-% Butylacrylat, VeoVa9 oder VeoVa10, Vinylchlorid oder Ethylen copolymerisiert werden können, und wobei sich die Angaben in Gew.-% auf jeweils 100 Gew.-% aufaddieren.

Besonders bevorzugt werden in Schritt B) als ethylenisch ungesättigte Monomere auch Monomerengemische umfassend ein oder mehrere (Meth)acrylsäureester, wie Methyl(meth)acrylat und/oder Butyl(meth)acrylat, 0 bis 2 Gew.-%, insbesondere 0,1 bis 2 Gew.-% von einem oder mehreren ethylenisch ungesättigten Carbonsäuren, wie Acrylsäure, Methacrylsäure oder Crotonsäure, und gegebenenfalls 0 bis 2 Gew.-%, insbesondere 0,1 bits 2 Gew.-% von einem oder mehreren ethylenisch ungesättigten Silahen, wie Vinyltrimethoxysilan, Vinyltriethoxysilan, Vinylmethyldimethoxysilan oder Vinylmethyldiethoxysilan; ein oder mehrere (Meth)acrylsäureester, wie Methyl(meth)acrylat und/oder Butyl(meth)acrylat, 0 bis 2 Gew.-%, insbesondere 0,1 bis 2 Gew.-% von einem oder mehreren ethylenisch ungesättigten Silane, wie Vinyltrimethoxysilan, Vinyltriethoxysilan, Vinylmethyldimethoxysilan oder Vinylmethyldiethoxysilan, wobei gegebenenfalls noch 0 bis 50 Gew.-%, insbesondere 0,1 bis 50 Gew.-% Styrol copolymerisiert werden können, wobei sich die Angaben in Gew.-% auf jeweils 100 Gew.-% aufaddieren.

Für die Polymerisation in Schritt B) werden Kompositpartikel aus Stufe A) teilweise oder vorzugsweise ganz, insbesondere in Form einer wässrigen Dispersion, vorgelegt. Hierbei können die Schritte A) und B) unmittelbar nacheinander und gegebenenfalls in ein und demselben Reaktor, d.h. als Eintopfreaktion ausgeführt werden. Alternativ können die Kompositpartikel aber auch vollständig oder teilweise während der Polymerisation in Stufe B) in Form einer wässrigen Dispersion oder eines Pulvers zudosiert werden.

Die ethylenisch ungesättigten Monomere in Schritt B) können ganz oder vorzugsweise teilweise vorgelegt werden, und der gegebenenfalls verbleibende Rest kann während der Polymerisation zugegeben werden, Vorzugsweise werden mindestens 40 Gew.-%, besonders bevorzugt 60 bis 95 Gew.-% der in Schritt B) eingesetzten ethylenisch ungesättigten Monomere zudosiert, bezogen auf die insgesamt in Schritt B) eingesetzten ethylenisch ungesättigten Monomere. Die ethylenisch ungesättigten Monomere können ih form einer wässrigen Emulsion oder vorzugsweise in Reinsubstanz zugegeben werden. Bei Zugabe in Reinsubstanz werden die Dispersionen der modifizierten Kompositpartikel mit höheren Feststoffgehalten erhalten.

Die Polymerisation in Schritt B) erfolgt nach dem Suspensions- , Miniemulsionspolymerisationsverfahren oder vorzugsweise nach dem Emulsionspolymerisationsverfahren wobei die Polymerisationstemperatur im allgemeinen 20°C bis 100°C, vorzugsweise 60°C bis 95°C beträgt, und bei der Copolymerisation von gasförmigen Comonomeren wie Ethylen auch unter Druck, im allgemeinen zwischen 5 bar und 100 bar, gearbeitet werden kann. Die Polymerisation erfolgt in Wasser. Die Initiierung der Polymerisation erfolgt mit den für die Emulsionspolymerisation bzw. Suspensionspolymerisation gebräuchlichen wasserorganischen bzw. monomerorganischen Initiatoren oder Redox-Initiator-Kombinationen. Beispiele für wasserorganische Initiatoren sind Natriumpersulfat, Wasserstoffperoxid, Azobisisobutyronitril. Beispiele für monomerorganische Initiatoren sind Dicetylperoxydicarbonat, Dicyclohexylperoxydicarbonat, Dibenzoylperoxid. Die genannten Initiatoren werden im allgemeinen in einer Menge von 0,01 bis 0,5 Gew.-%, bezogen auf das Gesamtgewicht der Monomere, eingesetzt. Als Redox-Initiatoren verwendet man Kombinationen aus den genannten Initiatoren in Kombination mit Reduktionsmitteln. Geeignete Reduktionsmittel sind beispielsweise Natriumsulfit, Natriumhydroxymethansulfinat und Ascorbinsäure. Die Reduktionsmittelmenge beträgt vorzugsweise 0,01 bis 0,5 Gew.-%, bezogen auf das Gesamtgewicht der Monomere.

Die Polymerisation wird vorzugsweise bei pH-Werten zwischen 6 und 14 ausgeführt, und besonders bevorzugt bei pH-Werten zwischen 7,5 und 10,5. Bei diesen pH-Werten ist es von besonderem Vorteil, wenn die Kompositpartikel aus Schritt A) Einheiten von ethylenisch ungesättigten Carbonsäuren enthalten, da dadurch einer Separation der Kompositpartikel bzw. einer Agglomeratbildung entgegengewirkt werden kann.

Der pH-Wert kann in bekannter Weise durch organische oder anorganische Basen oder Puffer eingestellt werden, wie beispielsweise durch Zugabe von Ammoniak, Amine oder Alkalihydroxiden, wie beispielsweise Natronlauge. Vorzugsweise werden keine mehrwertigen Ionen, wie mehrfach geladene Metallionen, beispielsweise Erdalkaliionen, als Säuren, Basen oder Puffer in die Kompositpartikel eingebracht, da derartige Ionen zu einer Aggregierung von modifizierten Kompositpartikeln und damit zu einer Gelierung der modifizierten Kompositpartikel führen können.

Gegebenenfalls kann Schritt A) oder insbesondere Schritt B) in Gegenwart von einem oder mehreren Emulgatoren ausgeführt werden. In Schritt B) sind vorzugsweise 1 bis 5 Gew.-% Emulgatoren zugegen, bezogen auf die Menge an ethylenisch ungesättigten Monomeren in Schritt B). Geeignete Emulgatoren sind anionische, kationische oder nichtionische Emulgatoren, beispielsweise anionische Tenside, wie Alkylsulfate mit einer Kettenlänge von 8 bis 18 C-Atomen, Alkyl- oder Alkylarylethersulfate mit 8 bis 18 C-Atomen im hydrophoben Rest und bis zu 40 Ethylen- oder Propylenoxideinheiten, Alkyl- oder Alkylarylsulfonate mit 8 bis 18 C-Atomen, Ester und Halbester der Sulfobernsteinsäure mit einwertigen Alkoholen oder Alkylphenolen, öder nichtionische Tenside wie Alkylpolyglykolether oder Alkylarylpolyglykolether mit 8 bis 40 Ethylenoxid-Eintheiten.

Zur Steuerung des Molekulargewichts können während der Polymerisation regelnde Substanzen eingesetzt werden. Falls Regler eingesetzt werden, werden diese üblicherweise in Mengen zwischen 0,01 bis 5,0 Gew.-%, bezogen auf die zu polymerisierenden Monomeren, eingesetzt und separat oder auch vorgemischt mit Reaktionskomponenten dosiert. Beispiele solcher Substanzen sind n-Dodecylmercaptan, tert.-Dodecylmercaptan, Mercaptopropionsäure, Mercaptopropronsäuremethylester, Isopropanol und Acetaldehyd. Vorzugsweise werden keine regelnden Substanzen verwendet.

Nach Abschluss der Polymerisation in Stufe B) können Nebenprodukte, nicht umgesetzte Ausgangsstoffe, Lösungsmittel oder sonstige flüchtige Stoffe mittels Destillation, vorzugsweise unter reduziertem Druck, und gegebenenfalls unter Durchleiten oder Überleiten von Schleppgasen wie Luft, Stickstoff oder Wasserdampf entfernt werden. Zur Restmonomerentfernung kann auch wie Allgemein gebräuchlich nachpolymerisiert werden.

Die modifizierten Kompositpartikel haben vorzugsweise eine Kern-Schale-Struktur. Darin bilden die Kompositpartikel aus Schritt A) (Kompositpartikel A)) den Kern und die in Schritt B) im Zuge der Polymerisation der ethylenisch ungesättigten Monomere gebildeten polymeren Ketten (polymeren Ketten B)) die Schale bzw. Hülle. Die Kompositpartikel A) und die polymeren Ketten B) liegen also nicht oder zumindest nicht ausschließlich als Abmischung vor. Insbesondere wenn die organischen Polymere aus Stufe A) bzw. die Polymere B) Silan-Einheiten enthalten, sind die Kompositpartikel A) und die polymeren Ketten B) über kovalente Bindungen miteinander verknüpft. In diesem Falle handelt es sich bei den Produkten aus Schritt B) um gepfropften Kompositpartikel. In gepfropften Kompositpartikeln sind ein oder mehrere polymere Ketten B) an die Kompositpartikel aus Schritt A) über chemische Bindungen gebunden.

Die modifizierten Kompositpartikel haben eine Glasübergangstemperatur Tg von vorzugsweise -60 °C bis +120°C und besonders bevorzugt von -50 bis +100°C. Die modifizierten Kompositpartikel zeigen im Allgemeinen ein oder zwei Glasübergangstemperaturen, je nach Wahl der Monomere in den Schritten A) und B).

Die so erhältlichen modifizierten Kompositpartikel liegen in Form einer Dispersion vor und haben vorzugsweise einen Feststoffgehalt von 40 bis 70%, besonders bevorzugt von 45 bis 65% und am meisten bevorzugt von 50 bis 60%.

Die modifizierten Kompositpartikel haben vorzugsweise eine Viskosität von 65 bis 3.000 mPas und besonders bevorzugt von 75 bis 2000 mPas, insbesondere zwischen 80 und 900 mPas (Brookfield-Viskösität bei 25°C als 50 %ige Dispersion in Wasser).

Die anorganischen Domänen der modifizierten Kompositpartikel haben mittlere Teilchengrößen von vorzugsweise 2 nm bis 300 nm, besonders bevorzugt von 4 nm bis 100 nm und am meisten bevorzugt von 10 nm bis 50 nm (bestimmt mit dem Transmissionselektronenmikroskop Libra 120 der Firma Zeiss).

Zur Herstellung der modifizierten Kompositpartikel in Form von Pulvern werden die Dispersionen der modifizierten Kompositpartikel getrocknet, gegebenenfalls unter Zusatz von Schutzkolloiden als Trocknungshilfe. Geeignete Trocknungsverfahren sind beispielsweise die Wirbelschichttrocknung, die Walzentrocknüng, die Gefriertrocknung oder die Sprühtrocknung. Geeignete Trocknungshilfsmittel sind beispielsweise die oben genannten organischen Polymere. Vorzugsweise werden Polyvinylalkohole als Trocknungshilfsmittel eingesetzt. Vorzugsweise werden die wässrigen Mischungen sprühgetrocknet. Die Sprühtrocknung erfolgt dabei in üblichen Sprühtrocknungsanlagen, wobei die Zerstäubung mittels Ein-, Zwei- oder Mehrstoffdüsen oder mit einer rotierenden Scheibe erfolgen kann. Die Austrittstemperatur wird im Allgemeinen im Bereich von 45°C bis 120°C, bevorzugt zwischen 60°C bis 90°C gewählt.

Bei der Trocknung hat sich vielfach ein Gehalt von bis zu 1.5 Gew.-% Antischaummittel, bezogen auf die polymeren Bestandteile, als günstig erwiesen. Zur Erhöhung der Lagerfähigkeit durch Verbesserung der Verblockungsstabilität, insbesondere bei Pulvern mit niedriger Glasübergangstemperatur, kann das erhaltene Pulver mit einem Antiblockmittel (Antibackmittel), vorzugsweise bis 30 Gew.-%, bezogen auf das Gesamtgewicht polymerer Bestandteile, ausgerüstet werden. Beispiele für Antiblockmittel sind Ca- bzw. Mg-Carbonat, Talk, Gips, Kieselsäuren wie beispielsweise hochdisperse Kieselsäuren, Kaoline, Metakaolin, calciniertes Kaolin, Silicate mit Teilchengrößen vorzugsweise im Bereich von 10 nm bis 100 µm.

Die Viskosität der zu trocknenden Dispersion wird über den Feststoffgehalt so eingestellt, dass ein Wert von < 1500 mPas (Brookfield-Viskosität bei 20 Umdrehungen und 23°C), bevorzugt < 500 mPas, erhalten wird.

Zur Verbesserung der anwendungstechnischen Eigenschaften können den modifizierten Kompositpartikeln weitere Zusätze zugegeben werden. Weitere, in bevorzugten Ausführungsformen enthaltene Bestandteile der modifizierten Kompositpartikel sind beispielsweise Bindemittel, Pigmente, Füllstoffe wie beispielsweise Zeolithe, Schaumstabilisatoren, Hydrophobierungsmittel oder Luftporenbildner. Vorzugsweise werden diese Zusätze während oder nach der Trocknung der Dispersion zugegeben.

Die so erhaltenen modifizierten Kompositpartikel in Form von Pulvern können durch anschließendes Mahlen und/oder Redispergieren in Wasser, organischen Lösungsmitteln oder Reaktivverdünner in die gewünschte Form gebracht werden. Als Reaktivverdünner sind beispielsweise die oben unter den Monomeren a) oder Monomeren b) aufgeführten ethylenisch ungesättigten Substanzklassen und Verbindungen geeignet. Bevorzugte Reaktivverdünner sind Ethylenisch ungesättigte Aromaten, wie Styrol, (Meth)acrylate, wie Ethylenglykoldimethacrylat, oder Epoxide.

Die erfindungsgemäßen modifizierten Kompositpartikel sind in organischen Lösungsmitteln, Reaktivverdünnern oder Wasser oder in Form von Pulvern stabil, auch ohne Zugabe von stabilisatoren, Emulgatoren oder Schutzkolloiden.

Die modifizierten Kompositpartikel eignen sich als Bindemittel, Cobindemittel oder Additive zur Verbesserung der anwendungstechnischen Eigenschaften mannigfacher Produkte. Durch Einsatz der modifizierten Kompositpartikel in Beschichtungsmitteln oder Klebstoffen können beispielsweise deren Thermostabilität oder Kratzfestigkeit gesteigert werden. Modifizierte Kompositpartikel enthaltende Klebstoffe zeigen zudem häufig ein verbessertes Fließverhalten sowie ein stabiles E-Modul bei erhöhter Temperatur und ergeben nach Applikation beispielsweise abziehbare Klebstofffilme. Mit modifizierten Kompositpartikel enthaltenden Beschichtungsmitteln können Beschichtungen mit Mattierungseffekt ausgestattet werden. Ebenso ist der Einsatz der modifizierten Kompositpartikel in Formulierungen für Pulverlacke, Kunststoff- und Kompositmaterialien, beispielsweise zur Herstellung von Kunststoff-, Kompositbauteilen oder Verpackungsmaterialien, vorteilhaft. Die modifizierten Kompositpartikel eignen sich auch zur Oberflächenbehandlung für synthetische oder natürliche Materialien, wie Fasern oder Partikel, wie vorzugsweise Gesteine, Holz, Leder, Papier, Textilien, Kunststoffen, wie Kunststofffolien, Dabei wirken die modifizierten Kompositpartikel beispielsweise als Imprägnierungsmittel, Versiegelungsmittel oder als Primer zur Haftungsverstärkung, als Barriereschicht, Korrosionschutz oder schmutzabweisend. Der schmutzabweisende Effekt kann insbesondere bei entsprechenden Anwendungen in Teppichen oder Auslegware in vorteilhafter Weise ausgenutzt werden. Mit den modifizierten Kompositpartikeln können auch schwer brennbare Beschichtungen für Holz, Kunststoffe, Leder und Papier hergestellt. Gesteine können verfestigt oder saniert werden. In Produkten der Verpackungsindustrie kann durch Zusatz der Kompositpartikel eine Gasbarriere erzeugt werden.

Überraschenderweise sind auch hochfeststoffhaltige wässrige Dispersionen der erfindungsgemäßen modifizierten Kompositpartikel lagerstabil und niederviskos und somit leicht zu handhaben. So neigen entsprechende Dispersionen nicht zur Gelierung und sind scherstabil. Die modifizierten Kompositpartikel verfilmen in hervorragender Weise, und dies trotz ihres hohen Anteils an anorganischen Bestandteilen, die an sich überhaupt nicht verfilmen. Zudem zeigen die verfilmten modifizierten Kompositpartikel hervorragende mechanische Eigenschaften sowie Festigkeiten und sind wasserbeständig. Dieses Eigenschaftsprofil macht die erfindungsgemäßen modifizierten Kompositpartikel beispielsweise als Bindemittel, oder Cobindemittel für rissüberbrückende Farben besonders interessant. Und da die organischen bzw. anorganischen Anteile in den Kompositpartikeln in Schritt A) wie auch die ethylenisch ungesättigten Monomere in Schritt B) hinsichtlich ihrer chemischen Eigenschaften, wie Hydrophilie, Lipophilie oder Glasübergangstemperaturen, oder ihrer relativen Gewichtsanteilen in den modifizierten Kompositpartikeln über einen großen Bereich variiert werden können, wird eine hohe Produktvielfalt zugänglich, so dass die modifizierten Kompositpartikeln für eine Vielzahl von Anwendungen bzw. Anforderungen maßgeschneidert werden können und somit eine hohe Flexibilität eröffnen.

Des Weiteren sind die modifizierten Kompositpartikel thermostabil, UV-beständig, Steigern Farbstärke von Farben und haften auf unterschiedlichen Untergründen, sind aber dennoch nicht klebrig. Der Einsatz der hochfestatoffhaltigen Dispersionen in Beschichtungsmitteln führt zu Beschichtungen, die weniger zur Rissbildung neigen.

Die folgenden Beispiele dienen der detaillierten Erläuterung der Erfindung und sind in keiner Weise als Einschränkung zu verstehen.

### Herstellung des organischen Polymers 1

In einem Reaktor mit 3 Liter Volumen wurden 470g deionisiertes Wasser, 3g Natriumlaurylsulfat, 10g Genapol PF 20 (Fa. Clariant), 1,0g Kaliumperoxodisulfat und 2g Ammoniak (12,5%-ig) in einer Stickstoffatmosphäre vorgelegt und unter Rühren auf 40°C erwärmt.

Bei dieser Temperatur wurden 70g einer Mischung folgender Zusammensetzung in den Reaktor gegeben:

| | |
|---|---|
| Vinyltriethoxysilan | 2,4g |
| Methacrylsäure | 24g |
| Butylacrylat | 285,6g |
| Styrol | 52,8g |
| Methylmethacrylat | 115,2g |
| Dodecylmercaptan | 1,0g |

Anschließend wurde die Temperatur auf 80°C erhöht. 30 Minuten nach der Erreichen von 80°C wurde der Rest der vorgenannten Monomermischung innerhalb von 100 Minuten in den Reaktor zudosiert. Nach Dosierende wurde eine Stunde bei 85°C gerührt. Der pH-Wert während der Polymerisation wurde im Bereich von 3 bis 4,5 gehalten.

Anschließend wurde die Dispersion auf 60°C gekühlt, der pH-Wert mit einer Ammoniaklösung (215g Wasser + 17g NH₃ 12,5%-ig) auf 9 eingestellt und 30 Minuten geführt und auf Raumtemperatur abgekühlt.

Es wurde eine Lösung des organischen Polymers mit einem Feststoffgehalt von 41% und einer Viskosität von 6.500 mPa.s erhalten (Brookfield-Viskosität bei 25°C).

### Beispiel 1: Modifizierte Kompositpartikel

500g der vorgenannten Lösung des organischen Polymers 1 (Feststoffgehalt 41%) wurden mit 400g eines Silicasols (Bindzil 2040, Handelsname der Firma Ekanobel, Festgehalt 41%) bei pH 9 gemischt und zwei Stunden bei 60°C gerührt.

Die so erhaltenen Kompositpartikel in Form einer Dispersion (Stufe A)) hatten eine mittlere Teilchengröße von 85 nm ( bestimmt mit dem Gerät Nano-Sizer der Firma Coulter Electronics, LTD) und eine Viskosität von 1.300 mPa.s (Brookfield-Viskosität bei einem Feststoffgehalt von 41% und pH 9 sowie einer Temperatur von 23°C).

Anschließend wurde die Temperatur auf 80°C erhöht und 50g der unten angegebenen Monomermischung in den Reaktor zugegeben, danach 10g Kaliumperoxodisulfatlösung (4%-ig) in den Reaktor zugegeben und der Rest der Monomermischung innerhalb von 60 Minuten zudosiert.

### Monomermischung:

| | |
|---|---|
| Vinyltriethoxysilan | 0,5g |
| Methylmethacrylat | 62,0g |
| Butylacrylat | 90,5g |
| Styrol | 17,0g |

Nach dem Dosierende der Monomermischung wurde der Reaktionsansatz noch 2,0 Stunden bei 85°C gerührt. Nach der Abkühlung wurde das Reaktionsgemisch durch ein Nylonsieb (Maschenweite: 150 µm) filtriert.

Die so erhaltenen modifizierten Kompositpartikel lagen in Form einer Dispersion mit einem Feststoffgehalt von 50% und einer Viskosität von 120 mPa.s vor (Brookfield-Viskosität, 23°C). Die modifizierten Kompositpartikel hatten eine mittlere Teilchengröße von 125 hm ( bestimmt mit dem Gerät Nano-Sizer der Firma Coulter Electronics, LTD).

Die Dispersion der modifizierten Kompositpartikel weist also trotz eines höheren Feststoffgehalts überraschenderweise eine niedrigere Viskosität auf als die Zwischenprodukte aus Stufe A).

### Beispiel 2: modifizierte Kompositpartikel (Eintopfreaktion)

In einem Reaktor mit 3 Liter Volumen wurden 470g deionisiertes Wasser, 3g Natriumlaurylsulfat, 10g Genapol PF 20 (Fa. Clariant), 1,0g Kaliumperoxodisulfat und 2g Ammoniak (12,5%-ig) in einer Stickstoffatmosphäre vorgelegt und unter Rühren auf 40°C erwärmt.

Bei dieser Temperatur wurden 70g einer Mischung folgender Zusammensetzung in den Reaktor gegeben:

| | |
|---|---|
| Vinyltriethoxysilan | 2,4g |
| Methacrylsäure | 24g |
| Butylacrylat | 285,6g |
| Styrol | 52,8g |
| Methylmethacrylat | 115,2g |
| Dodecylmercaptan | 1,0g |

Anschließend wurde die Temperatur auf 80°C erhöht. 30 Minuten nach der Erreichung von 80°C wurde der Rest der Monomermischung innerhalb von 100 Minuten in den Reaktor zudosiert. Nach Dosierende wurde eine Stunde bei 85°C gerührt. Der pH-Wert wurde während der Polymerisation bei 3 bis 4,5 gehalten.

Anschließend wurde die Dispersion auf 60°C gekühlt, der pH-Wert mit einer Ammoniaklösung (215g Wasser + 17g NH₃ 12,5%-ig) auf 9 eingestellt und 30 Minuten gerührt. Auf diese Weise wurde das organische Polymer 2 erhalten.

Anschließend wurden 958g Silicasol (Bindzil 2040, FG 41%), in den Reaktor zugegeben und 2 Stunden bei 60°C gerührt.

Auf diese Weise wurden die Kompositpartikel der Stufe A in Form einer Dispersion erhalten.

Anschließend wurde die Temperatur auf 80°C erhöht und 100g oder unten angegebenen Monomermischung in den Reaktor zugegeben, danach 15g Kaliumperoxodisulfatlösung (4%-ig) in den Reaktor zugegeben und der Rest der Monomermischung innerhalb von 120 Minuten zudosiert.

### Monomermischung:

| | |
|---|---|
| Vinyltriethoxysilan | 1,2g |
| Methylmethacrylat | 148,5g |
| Butylacrylat | 216,8g |
| Styrol | 40,7g |

Nach dem Dosierende der Monomermischung wurde die Kompositdispersion bei 85°C noch 2,0 Stunden gerührt. Nach der Abkühlung wurde die Kompositdispersion durch ein Nylonsieb (Maschenweite: 150 µm) filtriert.

Die so erhaltenen modifizierten Kompositpartikel lagen in Form einer Dispersion mit einem Feststoffgehalt von 50,2% und einer Viskosität von 150 mPa.s (Brookfield-Viskosität bei 25°C) vor. Die modifizierten Kompositpartikel hatten eine mittlere Teilchengröße von 125 nm (bestimmt mit dem Gerät Nano-Sizer der Firma Coulter Electronics, LTD).

## Patentansprüche

1. Verfahren zur Herstellung von modifizierten Kompositpartikeln, indem
A) ein oder mehrere feinteilige anorganische Feststoffe und
ein oder mehrere organische Polymere
in einem Lösungsmittel oder einem Gemisch von mehreren Lösungsmitteln gemischt werden,
wobei feinteilige anorganische Feststoffe an organische Polymere fixiert werden und somit Kompositpartikel gebildet werden, und
wobei die organischen Polymere basieren auf
a) 0,01 bis 30 Gew.-%, bezogen auf das Gesamtgewicht der insgesamt bei der Polymerisation zur Herstellung der organischen Polymere eingesetzten Monomere, an einem oder mehreren ethylenisch ungesättigten Monomeren mit einer oder mehreren weiteren funktionellen Gruppen ausgewählt aus der Gruppe umfassend Carbonsäuregruppen oder deren Derivate, Silan-, Sulfonsäure-, Sulfat-, Phosphat-, Phosphonat-, Iso-Cyanat-, Amin-, quaternisierte Amin-, Hydrazin-, Epoxy-, Ether-, Hydroxy- oder CO-Gruppen, und
b) einem oder mehreren von den Monomeren a) verschiedenen ethylenisch ungesättigten Monomeren, **dadurch gekennzeichnet, dass** anschließend
B) in Gegenwart der Kompositpartikel aus Schritt A) ein oder mehrere ethylenisch ungesättigte Monomere polymerisiert werden.

2. Verfahren zur Herstellung von modifizierten Kompositpartikeln nach Anspruch 1, **dadurch gekennzeichnet, dass** ein oder mehrere feinteilige anorganische Feststoffe ausgewählt werden aus der Gruppe umfassend Metalle oder Metallverbindungen, wie Metalloxide oder Metallsalze, Halbmetalle oder Halbmetallverbindungen, wie Halbmetalloxide oder Halbmetallsalze.

3. Verfahren zur Herstellung von modifizierten Kompositpartikeln nach Anspruch 1 oder 2, **dadurch gekennzeichnet, dass** ein oder mehrere feinteilige anorganische Feststoffe ausgewählt werden aus der Gruppe umfassend Kolloide von Palladium, Silber, Ruthenium, Platin, Gold und Rhodium und deren Legierungen, Oxide von Titan, Zirkonium, Zinn, Aluminium, Barium, Magnesium, Eisen, Chrom, Antimon, Wismut, Zink, Nickel, Cobalt, Kupfer, Yttrium und Cer und deren Hydroxyoxide, Metallsulfide, Metallsulfate, Carbonate, Metallcarbonate, Phosphate, Silikate, Aluminate und Borate.

4. Verfahren zur Herstellung von modifizierten Kompositpartikeln nach Anspruch 1 bis 3, **dadurch gekennzeichnet, dass** als feinteilige anorganische Feststoffe ein oder mehrere Siliziumdioxide eingesetzt werden.

5. Verfahren zur Herstellung von modifizierten Kompositpartikeln nach Anspruch 1 bis 4, **dadurch gekennzeichnet, dass** in Schritt A) der Anteil der feinteiligen anorganischen Feststoffe 2 bis 97 Gew.-% beträgt, bezogen auf die Trockenmasse der insgesamt eingesetzten Menge an organischen Polymeren und feinteiligen anorganischen Feststoffe.

6. Verfahren zur Herstellung von modifizierten Kompositpartikeln nach Anspruch 1 bis 5, **dadurch gekennzeichnet, dass** die Monomere a) ausgewählt werden aus der Gruppe umfassend ethylenisch ungesättigte Mono- und Dicarbonsäuren, ethylenisch ungesättigte Carbonsäureamide und -nitrile, Mono- und Diester der Fumarsäure und Maleinsäure, Maleinsäureanhydrid, ethylenisch ungesättigte Sulfonsäuren bzw. deren Salze, ethylenisch ungesättigte Epoxide, ethylenisch ungesättigte Silane, ethylenisch ungesättigte Hydroxy- oder Keto-Verbindungen, Diacetonacrylamid, Acetylacetoxyethylacrylat oder -methacrylat und Vinylether.

7. Verfahren zur Herstellung von modifizierten Kompositpartikeln nach Anspruch 1 bis 6, **dadurch gekennzeichnet, dass** die ethylenisch ungesättigten Monomere b) ausgewählt werden aus der Gruppe umfassend Vinylester von Carbonsäuren mit 1 bis 15 C-Atomen, Methacrylsäureester oder Acrylsäureester von Carbonsäuren mit unverzweigten oder verzweigten Alkoholen mit 1 bis 15 C-Atomen, Olefine und Diene, Vinylarömaten und Vinylhalogenide.

8. Verfahren zur Herstellung von modifizierten Kompositpartikeln nach Anspruch 1 bis 7, **dadurch gekennzeichnet, dass** in Schritt A) der Anteil der organischen Polymere 3 bis 98 Gew.-% beträgt, bezogen auf die Trockenmasse der insgesamt eingesetzten Menge an organischen Polymeren und feinteiligen anorganischen Feststoffe.

9. Verfahren zur Herstellung von modifizierten Kompositpartikeln nach Anspruch 1 bis 8, **dadurch gekennzeichnet, dass** die ethylenisch ungesättigten Monomere in Schritt B) ausgewählt werden aus der Gruppe umfassend die Monomere a) und die Monomere b) aus den Ansprüchen 1, 6 oder 7.

10. Verfahren zur Herstellung von modifizierten Kompositpartikeln nach Anspruch 1 bis 9, **dadurch gekennzeichnet, dass** in Schritt B) 10 bis 60 Gew.-% ethylenisch ungesättigte Monomere eingesetzt werden, bezogen auf das Trockengewicht der organischen Polymere und feinteiligen anorganischen Feststoffe aus Schritt A).

11. Verfahren zur Herstellung von modifizierten Kompositpartikeln nach Anspruch 1 bis 10, **dadurch gekennzeichnet, dass** in Schritt B) als ethylenisch ungesättigte Monomere Monomerengemische umfassend ein oder mehrere Vinylester, 0 bis 1 Gew.-% von einer oder mehreren ethylenisch ungesättigten Carbonsäuren, und 0 bis 2 Gew.-% von einem oder mehreren ethylenisch ungesättigten Silanen; ein oder mehrere Vinylester, 0,1 bis 2 Gew.-% von einem oder mehreren ethylenisch ungesättigten Silanen eingesetzt werden, wobei gegebenenfalls noch 2 bis 40 Gew.-% Butylacrylat, VeoVa9 oder VeoVa10, Vinylchlorid oder Ethylen copolymerisiert werden können, und wobei sich die Angaben in Gew.-% auf jeweils 100 Gew.-% aufaddieren.

12. Verfahren zur Herstellung von modifizierten Kompositpartikeln nach Anspruch 1 bis 10, **dadurch gekennzeichnet, dass** in Schritt B) als ethylenisch ungesättigte Monomere Monomerengemische umfassend ein oder mehrere (Meth)acrylsäureester, 0 bis 2 Gew.-% von einem oder mehreren ethylenisch ungesättigten Carbonsäuren und gegebenenfalls 0 bis 2 Gew.-% von einem oder mehreren ethylenisch ungesättigten Silanen; ein oder mehrere (Meth)acrylsäureester, 0,1 bis 2 Gew.-% von einem oder mehreren ethylenisch ungesättigten Silane eingesetzt werden, wobei gegebenenfalls noch 0,1 bis 50 Gew.-% Styrol copolymerisiert werden können, wobei sich die Angaben in Gew.-% auf jeweils 100 Gew.-% aufaddieren.

13. Verfahren zur Herstellung von modifizierten Kompositpartikeln nach Anspruch 1 bis 12, **dadurch gekennzeichnet, dass** die modifizierten Kompositpartikel in Form von Dispersionen mit Feststoffgehalten von 40 bis 70% vorliegen.

14. Verfahren zur Herstellung von modifizierten Kompositpartikeln nach Anspruch 1 bis 13, **dadurch gekennzeichnet, dass** die modifizierten Kompositpartikel in Form von Dispersionen mit einem Feststoffgehalt von 50% eine Viskosität von 65 bis 3.000 mPas haben (Brookfield-Viskosität bei 25°C).

15. Modifizierte Kompositpartikel erhältlich nach einem der Verfahren der Ansprüche 1 bis 14.

16. Modifizierte Kompositpartikel gemäß Anspruch 15, **dadurch gekennzeichnet, dass** die modifizierten Kompositpartikel eine Kern-Schale-Struktur haben, worin die Kompositpartikel aus Schritt A) den Kern und die in Schritt B) im Zuge der Polymerisation der ethylenisch ungesättigten Monomere gebildeten polymeren Ketten die Schale bilden.

17. Modifizierte Kompositpartikel gemäß Anspruch 15 oder 16, **dadurch gekennzeichnet, dass** die organischen Polymere zu 0,01 bis 5 Gew.-% auf ethylenisch ungesättigten Silanen basieren, bezogen auf das Gesamtgewicht der insgesamt bei der Polymerisation zur Herstellung der organischen Polymere eingesetzten Monomere.

18. Verwendung der modifizierten Kompositpartikel gemäß Anspruch 15 bis 17 als Bindemittel, Cobindemittel oder Additiv für Pulverlacke, Beschichtungsmittel, Klebstoffe, hydraulisch abbindende Beschichtungsmassen oder für Formulierungen von Kunststoff- oder Kompositmaterialien.

19. Verwendung der modifizierten Kompositpartikel gemäß Anspruch 15 bis 17 zur Oberflächenbehandlung von synthetischen oder natürlichen Materialien, zur Behandlung von Fasern, von Teppichen oder Auslegware.

## Claims

1. Process for producing modified composite particles by
A) mixing one or more fine inorganic solids and one or more organic polymers
in a solvent or a mixture of a plurality of solvents,
with fixing of fine inorganic solids onto organic polymers and hence formation of composite particles, and
where the organic polymers are based on
a) 0.01 to 30% by weight, based on the total weight of all monomers used in the polymerization for preparation of the organic polymers, of one or more ethylenically unsaturated monomers having one or more further functional groups selected from the group comprising carboxylic acid groups or derivatives thereof, silane groups, sulfo groups, sulfate groups, phosphate groups, phosphonate groups, isocyanate groups, amine groups, quaternized amine groups, hydrazine groups, epoxy groups, ether groups, hydroxyl groups or CO groups, and
b) one or more ethylenically unsaturated monomers other than the monomers a), **characterized in that** subsequently
B) one or more ethylenically unsaturated monomers are polymerized in the presence of the composite particles from step A).

2. Process for producing modified composite particles according to Claim 1, **characterized in that** one or more fine inorganic solids selected from the group comprising metals or metal compounds, such as metal oxides or metal salts, semimetals or semimetal compounds, such as semimetal oxides or semimetal salts.

3. Process for producing modified composite particles according to Claim 1 or 2, **characterized in that** one or more fine inorganic solids selected from the group comprising colloids of palladium, silver, ruthenium, platinum, gold and rhodium and alloys thereof, oxides of titanium, zirconium, tin, aluminum, barium, magnesium, iron, chromium, antimony, bismuth, zinc, nickel, cobalt, copper, yttrium and cerium and the hydroxy oxides thereof, metal sulfides, metal sulfates, carbonates, metal carbonates, phosphates, silicates, aluminates and borates.

4. Process for producing modified composite particles according to Claims 1 to 3, **characterized in that** the fine inorganic solids used are one or more silicon dioxides.

5. Process for producing modified composite particles according to Claims 1 to 4, **characterized in that** the proportion of fine inorganic solids in step A) is 2 to 97% by weight, based on the dry mass of the total amount of organic polymers and fine inorganic solids used.

6. Process for producing modified composite particles according to Claims 1 to 5, **characterized in that** the monomers a) are selected from the group comprising ethylenically unsaturated mono- and dicarboxylic acids, ethylenically unsaturated carboxamides and carbonitriles, mono- and diesters of fumaric acid and maleic acid, maleic anhydride, ethylenically unsaturated sulfonic acids or salts thereof, ethylenically unsaturated epoxides, ethylenically unsaturated silanes, ethylenically unsaturated hydroxyl or keto compounds, diacetoneacrylamide, acetylacetoxyethyl acrylate or methacrylate, and vinyl ethers.

7. Process for producing modified composite particles according to Claims 1 to 6, **characterized in that** the ethylenically unsaturated monomers b) are selected from the group comprising vinyl esters of carboxylic acids having 1 to 15 carbon atoms, methacrylates or acrylates with unbranched or branched alcohols having 1 to 15 carbon atoms, olefins and dienes, vinylaromatics and vinyl halides.

8. Process for producing modified composite particles according to Claims 1 to 7, **characterized in that** the proportion of organic polymers in step A) is 3 to 98% by weight, based on the dry mass of the total amount of organic polymers and fine inorganic solids used.

9. Process for producing modified composite particles according to Claims 1 to 8, **characterized in that** the ethylenically unsaturated monomers in step B) are selected from the group comprising the monomers a) and the monomers b) from claims 1, 6 or 7.

10. Process for producing modified composite particles according to Claims 1 to 9, **characterized in that** 10 to 60% by weight of ethylenically unsaturated monomers are used in step B), based on the dry weight of the organic polymers and fine inorganic solids from step A).

11. Process for producing modified composite particles according to Claims 1 to 10, **characterized in that** the ethylenically unsaturated monomers used in step B) are monomer mixtures comprising one or more vinyl esters, 0 to 1% by weight of one or more ethylenically unsaturated carboxylic acids, and 0 to 2% by weight of one or more ethylenically unsaturated silanes; one or more vinyl esters, 0.1 to 2% by weight of one or more ethylenically unsaturated silanes, with optional copolymerization of another 2 to 40% by weight of butyl acrylate, VeoVa9 or VeoVa10, vinyl chloride or ethylene, and where the figures in % by weight add up to 100% by weight in each case.

12. Process for producing modified composite particles according to Claims 1 to 10, **characterized in that** the ethylenically unsaturated monomers used in step B) are monomer mixtures comprising one or more (meth)acrylic esters, 0 to 2% by weight of one or more ethylenically unsaturated carboxylic acids and optionally 0 to 2% by weight of one or more ethylenically unsaturated silanes; one or more (meth)acrylic esters, 0.1 to 2% by weight of one or more ethylenically unsaturated silanes, with optional copolymerization 0.1 to 50% by weight of styrene, where the figures in % by weight add up to 100% by weight in each case.

13. Process for producing modified composite particles according to Claims 1 to 12, **characterized in that** the modified composite particles are in the form of dispersions having a solids content of 40 to 70%.

14. Process for producing modified composite particles according to Claims 1 to 13, **characterized in that** the modified composite particles in the form of dispersions having a solids content of 50% have a viscosity of 65 to 3000 mPas (Brookfield viscosity at 25°C).

15. Modified composite particles obtainable by one of the processes of Claims 1 to 14.

16. Modified composite particles according to Claim 15, **characterized in that** the modified composite particles have a core-shell structure in which the composite particles from step A) form the core and the polymeric chains formed in the course of polymerization of the ethylenically unsaturated monomers in step B) form the shell.

17. Modified composite particles according to Claim 15 or 16, **characterized in that** the organic polymers are based to an extent of 0.01 to 5% by weight on ethylenically unsaturated silanes, based on the total weight of all of the monomers used in the polymerization for preparation of the organic polymers.

18. Use of the modified composite particles according to Claims 15 to 17 as binders, cobinders or additives for powder coating materials, coating compositions, adhesives, hydraulically setting coating materials, or for formulations of polymer or composite materials.

19. Use of the modified composite particles according to Claims 15 to 17 for surface treatment of synthetic or natural materials, or for treatment of fibers, rugs or fitted carpets.

## Revendications

1. Procédé pour la production de particules composites modifiées, par
A) mélange d'une ou de plusieurs matières solides inorganiques finement divisées et
d'un ou de plusieurs polymères organiques dans un solvant ou un mélange de plusieurs solvants,
les matières solides inorganiques finement divisées se fixant sur les polymères organiques, et des particules composites étant ainsi formées, et
les polymères organiques étant à base de
a) 0,01 à 30 % en poids, par rapport au poids total des monomères utilisés au total dans la polymérisation pour la préparation des polymères organiques, d'un ou de plusieurs monomères à insaturation éthylénique, comportant un ou plusieurs autres groupes fonctionnels choisis dans le groupe comprenant des groupes acide carboxylique ou leurs dérivés, des groupes silane, sulfo, sulfate, phosphate, phosphonate, isocyanate, amino, amino quaternisé, hydrazine, époxy, éther, hydroxy ou CO, et
b) un ou plusieurs monomères à insaturation éthylénique différents des monomères a), **caractérisé en ce qu'**ensuite
B) en présence des particules composites provenant de l'étape A) on effectue une polymérisation d'un ou de plusieurs monomères à insaturation éthylénique.

2. Procédé pour la production de particules composites modifiées selon la revendication 1, **caractérisé en ce que** lesdites une ou plusieurs matières solides inorganiques finement divisées sont choisies dans le groupe comprenant des métaux ou des composés métalliques, tels que des oxydes métalliques ou des sels métalliques, des métalloïdes ou des composés de métalloïdes, tels que des oxydes de métalloïdes ou des sels de métalloïdes.

3. Procédé pour la production de particules composites modifiées selon la revendication 1 ou 2, **caractérisé en ce qu'**une ou plusieurs matières solides inorganiques finement divisées sont choisies dans le groupe comprenant des colloïdes de palladium, argent, ruthénium, platine, or et rhodium et leurs alliages, des oxydes de titane, zirconium, étain, aluminium, baryum, magnésium, fer, chrome, antimoine, bismuth, zinc, nickel, cobalt, cuivre, yttrium et cérium et leurs hydroxydes, des sulfures métalliques, sulfates métalliques, carbonates, carbonates métalliques, phosphates, silicates, aluminates et borates.

4. Procédé pour la production de particules composites modifiées selon l'une quelconque des revendications 1 à 3, **caractérisé en ce qu'**on utilise comme matières solides inorganiques finement divisées un ou plusieurs dioxydes de silicium.

5. Procédé pour la production de particules composites modifiées selon l'une quelconque des revendications 1 à 4, **caractérisé en ce que** dans l'étape A) la proportion des matières solides inorganiques finement divisées vaut de 2 à 97 % en poids, par rapport à la masse sèche de la quantité totale utilisée de polymères organiques et matières solides inorganiques finement divisées.

6. Procédé pour la production de particules composites modifiées selon l'une quelconque des revendications 1 à 5, **caractérisé en ce que** les monomères a) sont choisis dans le groupe comprenant des acides mono- et dicarboxyliques à insaturation éthylénique, des carboxamides et carbonitriles à insaturation éthylénique, des mono- et diesters de l'acide fumarique et de l'acide maléique, l'anhydride maléique, des acides sulfoniques à insaturation éthylénique ou leurs sels, des époxydes à insaturation éthylénique, des silanes à insaturation éthylénique, des composés hydroxy ou céto à insaturation éthylénique, le diacétone-acrylamide, l'acrylate ou le méthacrylate d'acétylacétoxyéthyle et des éthers vinyliques.

7. Procédé pour la production de particules composites modifiées selon l'une quelconque des revendications 1 à 6, **caractérisé en ce que** les monomères à insaturation éthylénique b) sont choisis dans le groupe comprenant des esters vinyliques d'acides carboxyliques ayant de 1 à 15 atomes de carbone, des esters d'acide méthacrylique ou des esters d'acide acrylique avec des alcools ramifiés ou non ramifiés ayant de 1 à 15 atomes de carbone, des oléfines et des diènes, des composés vinylaromatiques et des halogénures de vinyle.

8. Procédé pour la production de particules composites modifiées selon l'une quelconque des revendications 1 à 7, **caractérisé en ce que** dans l'étape A) la proportion des polymères organiques vaut de 3 à 98 % en poids, par rapport à la masse sèche de la quantité totale utilisée de polymères organiques et matières solides inorganiques finement divisées.

9. Procédé pour la production de particules composites modifiées selon l'une quelconque des revendications 1 à 8, **caractérisé en ce que** les monomères à insaturation éthylénique dans l'étape B) sont choisis dans le groupe comprenant les monomères a) et les monomères b) des revendications 1, 6 ou 7.

10. Procédé pour la production de particules composites modifiées selon l'une quelconque des revendications 1 à 9, **caractérisé en ce que** dans l'étape B) on utilise de 10 à 60 % en poids de monomères à insaturation éthylénique, par rapport au poids sec des polymères organiques et matières solides inorganiques finement divisées de l'étape A).

11. Procédé pour la production de particules composites modifiées selon l'une quelconque des revendications 1 à 10, **caractérisé en ce que** dans l'étape B) on utilise comme monomères à insaturation éthylénique des mélanges de monomères comprenant un ou plusieurs esters vinyliques, 0 à 1 % en poids d'un ou de plusieurs acides carboxyliques à insaturation éthylénique, et 0 à 2 % en poids d'un ou de plusieurs silanes à insaturation éthylénique ; un ou plusieurs esters vinyliques, 0,1 à 2 % en poids d'un ou de plusieurs silanes à insaturation éthylénique, éventuellement encore 2 à 40 % en poids d'acrylate de butyle, de VeoVa9 ou VeoVa10, de chlorure de vinyle ou d'éthylène pouvant être copolymérisés, la somme des données en % en poids étant chaque fois égale à 100 % en poids.

12. Procédé pour la production de particules composites modifiées selon l'une quelconque des revendications 1 à 10, **caractérisé en ce que** dans l'étape B) on utilise comme monomères à insaturation éthylénique des mélanges de monomères comprenant un ou plusieurs esters d'acide (méth)acrylique, 0 à 2 % en poids d'un ou de plusieurs acides carboxyliques à insaturation éthylénique et éventuellement 0 à 2 % en poids d'un ou de plusieurs silanes à insaturation éthylénique ; un ou plusieurs esters d'acide (méth) acrylique, 0,1 à 2 % en poids d'un ou de plusieurs silanes à insaturation éthylénique, éventuellement encore 0,1 à 50 % en poids de styrène pouvant être copolymérisés, la somme des données en % en poids étant chaque fois égale à 100 % en poids.

13. Procédé pour la production de particules composites modifiées selon l'une quelconque des revendications 1 à 12, **caractérisé en ce que** les particules composites modifiées se trouvent sous forme de dispersions à teneurs en matière solide de 40 à 70 %.

14. Procédé pour la production de particules composites modifiées selon l'une quelconque des revendications 1 à 13, **caractérisé en ce que** les particules composites modifiées ont, sous forme de dispersions ayant une teneur en matière solide de 50 %, une viscosité de 65 à 3 000 mPa.s (viscosité Brookfield à 25 °C).

15. Particules composites modifiées pouvant être obtenues selon l'un des procédés des revendications 1 à 14.

16. Particules composites modifiées selon la revendication 15, **caractérisées en ce que** les particules composites modifiées ont une structure de noyau-enveloppe, les particules composites provenant de l'étape A) constituant le noyau et les chaînes polymères formées au cours de la polymérisation des monomères à insaturation éthylénique dans l'étape B) constituant l'enveloppe.

17. Particules composites modifiées selon la revendication 15 ou 16, **caractérisées en ce que** les polymères organiques sont à raison de 0,01 à 5 % en poids à base de silanes à insaturation éthylénique, par rapport au poids total des monomères utilisés au total dans la polymérisation pour la production des polymères organiques.

18. Utilisation des particules composites modifiées selon l'une quelconque des revendications 15 à 17, en tant que liant, co-liant ou additif pour peintures en poudre, produits de revêtement, adhésifs, matières de revêtement à prise hydraulique, ou pour des formulations de matériaux composites ou en matière plastique.

19. Utilisation des particules composites modifiées selon l'une quelconque des revendications 15 à 17, pour le traitement de surface de matériaux naturels ou synthétiques, pour le traitement de fibres, de tapis ou de moquette.
